# EUROPEAN PATENT APPLICATION

(11) **EP 4 811 285 A1**
(43) Date of publication of application: **23.09.2026**
(21) Application number: 25164208.8
(22) Date of filing: 17.03.2025
(51) Int. Cl.: G06T 7/246, G06T 7/277

(54) **METHOD, DEVICE, AND SYSTEM FOR TRACKING AN OBJECT IN A SEQUENCE OF VIDEO FRAMES**

(71) Applicant: Axis AB, 223 69 Lund (SE)
(72) Inventor: Danielsson, Niclas, 223 69 Lund (SE); Danielsson Fan, Xing, 223 69 Lund (SE)
(74) Representative: AWA Sweden AB

(57) **Abstract**

There is provided a method, device, and system for tracking an object in a sequence of video frames by using a tracking filter. In the method, costs are assigned for associating each object detection in a received set of object detections to the tracked object. The cost assigned to an object detection is a measure of deviation between a motion associated with the object detection and both of a first motion of the object estimated by the tracking filter and a second motion of the object indicated by motion vectors from a video encoder which encodes the sequence of video frames.

## Description

### Technical field

The present invention relates to the field of object tracking in video. In particular, it relates to a method, a device, and a system for tracking an object in a sequence of video frames.

### Background

Tracking objects in a video is a common task in computer vision. For example, in a surveillance application it is of interest to track persons in the video of a monitored scene. This can be used to count persons, raise alarms when a person passes into a forbidden area, or spends too much time in a certain area of the scene.

Object tracking commonly involves the use of a tracking filter which tracks states of the object, including position and velocity of the object. A tracking filter is an algorithm which recursively estimates the states of the object as detections of the object are made in the video. For this purpose, it uses a motion model to predict the states of the object at a future time point, and a measurement model to update the predicted states in case a detection of the object is made in a video frame at the future time point. A common choice of motion model is a constant velocity model which assumes that the object moves at a constant velocity.

The object tracking becomes more challenging when there are several objects in the scene since in that case one also need to determine which object detection should be used to update which object track. If the wrong determination is made the object tracking fails. For example, the result may be that a track which first follows one object suddenly starts to follow another object, sometimes referred to as an identity switch. When determining which object detection belongs to which object track, a cost for associating each object detection with each object track may be calculated. These costs are then input to an optimization algorithm which finds the associations between object detections and object tracks, e.g., by minimizing the total cost of the associations.

The cost for associating an object detection in a video frame to an object track usually includes a measure of how much the object detection deviates from the predicted position of the tracked object in the video frame as predicted by the tracking filter with the help of the motion model. Thus, the motion model of the tracking filter has an impact on the cost calculation and thereby the association of object detections to object tracks. As a consequence, when the tracking filter fails to predict the true motion of a tracked object there is an increased risk that a wrong object detection is used to update the object track, thereby leading to an identity switch, or that a correct object detection is not associated with the track, thereby leading to a loss of the track. For example, this could happen when a constant velocity motion model is used and the tracked object suddenly changes its speed and direction. There is thus room for improvements.

### Summary of the invention

In view of the above, it is thus an object of the present invention to mitigate the above problems and provide a tracking method in which the association between object detections and tracked objects is more adaptive to sudden motion changes of the object.

This object is achieved by the tracking method, device, and system defined by the attached independent claims. Advantageous embodiments are defined by the dependent claims.

According to a first aspect, there is provided a method for tracking an object in a sequence of video frames. The method comprises:
tracking an object in a sequence of video frames by using a tracking filter, wherein the tracking filter estimates a position and a first motion of the object in a current video frame,
receiving motion vectors from a video encoder which encodes the sequence of video frames, wherein the motion vectors are indicative of a second motion of the object in the current video frame,
receiving a set of object detections in a subsequent video frame in the sequence, wherein each object detection is associated with a motion that corresponds to a displacement between the estimated position of the object in the current video frame and a position of the object detection in the subsequent video frame,
assigning, for each object detection, a cost for associating the object detection to the tracked object, wherein the cost includes a measure of deviation between the motion associated with the object detection and both of the first motion in the current video frame estimated by the tracking filter and the second motion in the current video frame indicated by the motion vectors,
associating one of the object detections to the tracked object based on the costs assigned to the object detections, and
using the tracking filter to estimate a position and a first motion of the object in the subsequent video frame based on the associated object detection.

The inventors have realized that motion vectors from a video encoder which encodes the sequence of video frames can be used to estimate a current motion of the tracked object. They have further realized that the motion estimate from the motion vectors typically is more responsive to sudden motion changes of the object than the motion estimate from the tracking filter. They therefore propose to use the motion estimated from the motion vectors as a complement to the motion estimate from the tracking filter in the calculation of the association costs. As a result, the association between object detections and the tracked object can better adapt to sudden motion changes of the tracked object.

By a *tracking filter* is meant an algorithm which uses a series of noisy measurements observed over time to produce estimates of unknown variables. The tracking filter may also be referred to as a statistical motion filter. By way of example, the tracking filter may be a Kalman filter, an extended Kalman filter, or a statistical particle filter. In this disclosure, the measurements are detections of objects in the video frames. The unknown variables include position and motion, such as velocity, of the object. These unknown variables are also referred to herein as states.

The *position and motion* of the object typically refer to the position and motion of the object in an image plane of the video frames. The motion may include a velocity of the object. The position hence refers to one or more pixel position of the object in the video frame. The motion refers to a pixel motion of the object in the video frames, i.e., a change in pixel position over time. Notably, the position is not necessarily a single pixel position, but the object may cover an area which includes several pixels in the video frame. If so, the position may refer to the whole area covered by the object, such as the position of a bounding box surrounding the object. However, in some embodiments, the tracking is rather performed in a two- or three-dimensional coordinate system of a scene depicted by the sequence of video frames, such as in a two-dimensional top-down map of the scene or a three-dimensional map of the scene. In such embodiments, the position and motion of the object refer to the position and motion in the two- or three-dimensional coordinate system of the scene.

A *cost* for associating an object detection with a tracked object is a measure which is inversely related to the likelihood that the object detection is a detection of the tracked object. Thus, the higher the cost, the lower the likelihood that the object detection is a detection of the tracked object.

*By associating* an object detection with a tracked object is meant that the object detection is determined to be a detection of the tracked object. The determination of which object detection is a detection of which tracked object is made using the costs for associating the object detections with the tracked objects, i.e., depending on how likely different associations are. Generally, for a set of object detections and a set of tracked objects, it may find the combinations of object detections and tracked objects that leads to the lowest association costs. Thus, if only one tracked object is considered, the object detection having the lowest cost for association with that tracked object will be selected for association with the object track. However, if there are multiple tracked objects, the solution is more complex and among all possible combinations of object detections and tracked objects, the combinations leading to the lowest total cost may be selected for association.

An impact of the second motion on the cost may be set to depend on a reliability level of the received motion vectors such that the impact increases with increasing reliability level. Thus, the more reliable the motion vectors are, the more is the second motion, which is determined from the motion vector information, taken into account when assigning the cost.

In an embodiment, the reliability level of the received motion vectors is determined from a signal to noise ratio in the current video frame. In another embodiment, the estimated position of the object in the current video frame corresponds to an object area in the current video frame, and the reliability level of the received motion vectors is determined from a level of coherency of the motion vectors in the object area. Further, these two options may be combined. In this way, the degree to which the second motion is allowed to influence the assigned cost can be varied depending on a reliability of motion vector estimates in a certain scene or in a certain video frame.

In a first group of embodiments, the cost includes a combination of a first cost and a second cost. The first cost is a measure of deviation between the motion associated with the object detection and the first motion in the current video frame estimated by the tracking filter. The second cost is a measure of deviation between the motion associated with the object detection and the second motion in the current video frame indicated by the motion vectors. In this way, the second cost associated with the motion estimate from the motion vectors can be used to adjust or compensate the first cost associated with the motion estimate from the tracking filter, thereby making it more sensitive to sudden motion changes of the tracked object.

The combination may be a multiplicative combination or an additive combination of the first cost and the second cost. Thus, in the case of a multiplicative combination, the second cost serves as a gain factor which gains the first cost depending on a deviation of the motion associated with the object detection and the second motion indicated by the motion vectors. The higher the deviation, the higher the gain factor. In the case of an additive combination, the second cost instead serves as an additive correction term to the first cost. In both cases, the combined cost hence increases with increasing deviation between the motion associated with the object detection and the second motion indicated by the motion vectors. In this way, the method becomes more prone to make associations with object detections whose motion agrees with the second motion indicated by the motion vectors, and less prone to make associations with object detections whose motion deviates from the second motion indicated by the motion vectors

The tracking filter may use the estimated position and first motion of the object in the current video frame to predict a first position of the object in the subsequent video frame. The first cost may then be calculated as a positional deviation between the position of the detected object in the subsequent frame and the predicted first position of the object in the subsequent video frame. The first cost will hence be low for object detections which are close to the motion path of the object as predicted by the tracking filter. In order to make the prediction, the tracking filter may use a motion model, such as a constant velocity model. Thus, as long as the true object motion agrees with the motion model the first cost is a good measure for associating object detections to the object track. However, it will fail when the true object motion suddenly departs from the motion model.

In an embodiment, the second cost depends on an angular deviation between a direction of the motion associated with the object detection and a direction of the second motion in the current video frame indicated by the motion vectors. In this case, the second cost will be lower for object detections whose motion is in the same direction as the motion vectors. Accordingly, when the second cost is used to adjust the first cost, the method becomes more prone to associate such object detections with the object track. In this embodiment only directional information of the motion vectors is used, which may be advantageous in situations where the directional information of the motion vectors is found to be more reliable than the speed information of the motion vectors.

In another embodiment, the method further comprises predicting a second position of the object in the subsequent frame from the estimated position of the object in the current video frame and the second motion in the current video frame indicated by the motion vectors. The second cost is then calculated as a positional deviation between the position of the detected object in the subsequent video frame and the predicted second position of the object in the subsequent video frame. In this case, the second cost will be lower for object detections whose motion agrees with both the direction and speed of the second motion indicated by the motion vectors. Accordingly, when the second cost is used to adjust the first cost, the method becomes more prone to associate such object detections with the object track. This embodiment may be used in situations where the speed information provided by the motion vectors is found to be reliable.

In a second group of embodiments, object positions predicted from the first motion and the second motion are first combined and then used to calculate the cost for a detected object. In more detail, the tracking filter uses the estimated position and first motion of the object in the current video frame to predict a first position of the object in the subsequent video frame. Further, the method comprises predicting a second position of the object in the subsequent frame from the estimated position of the object in the current video frame and the second motion in the current video frame indicated by the motion vectors. The cost is then a positional deviation between the position of the detected object in the subsequent frame and a combination of the predicted first and second positions in the subsequent video frame. With this approach the object position predicted by the tracking filter is hence adjusted in view of the object position predicted from the motion vectors before calculating the cost. When there has been a sudden change in object velocity, there will be a discrepancy between the two predictions. By using the predicted object position from the motion vectors, the predicted object position from the tracking filter can be adjusted to better reflect the sudden object velocity change. As a result, the association of object detections to the object track becomes more adaptive to sudden object velocity changes.

The combination of the predicted first and second positions in the subsequent video frame may be a weighted average of the predicted first and second positions. A weight applied to the predicted second position may reflect a reliability level of the received motion vectors. The more reliable, the higher the weight applied to the predicted second position in relation to a weight applied to the predicted first position. In this way, the degree to which the predicted second position is used to adjust the first predicted position can be varied depending on a reliability of motion vector estimates in a certain scene or in a certain video frame.

The tracking method may be used in a multi-object tracking scenario in which it is applied to track a plurality of objects in the sequence of video frames. In such a scenario, in the step of associating, object detections are associated to the tracked plurality of objects so as to minimize a total cost of the object detections that are associated with the tracked plurality of objects. The most cost efficient combination of object detections and object tracks may found by way of optimization, e.g. by applying the Hungarian algorithm.

The tracking filter may be an algorithm which recursively estimates the position and first motion of the object as detections of the object are made in the video. In particular, it may estimate the position and the first motion of the object in the subsequent video frame by: predicting a position and a first motion of the object in the subsequent video frame from the position and the first motion of the object in the current video frame, and updating the predicted position and first motion of the object in the subsequent video frame in view of the associated object detection. For example, a Kalman filter, a particle filter, or a similar algorithm may be used.

According to a second aspect, there is provided a device for tracking an object in a sequence of video frames. The device comprises circuitry configured to carry out the method of the first aspect.

According to a third aspect, there is provided a system for tracking an object in a sequence of video frames. The system comprises a video encoder configured to encode the sequence of video frames and produce motion vectors indicative of a motion of the object in the video frames, an object detector configured to detect objects in the video frames of the sequence of video frames, and a device of the second aspect which receives motion vectors from the video encoder and object detections from the object detector.

According to a fourth aspect, there is provided a non-transitory computer-readable medium comprising computer program code which, when executed by a device with processing capability, causes the device to carry out the method of the first aspect.

The second, third, and fourth aspects may generally have the same features and advantages as the first aspect. It is further noted that the invention relates to all possible combinations of features unless explicitly stated otherwise.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Fig. 1 illustrates an exemplary scene in which there are moving objects that should be tracked over time.
Fig. 2 schematically illustrates a system for tracking an object in a sequence of video frames according to embodiments.
Fig. 3 illustrates a prior art approach of assigning costs for associating object detections to a tracked object.
Fig. 4 is a flowchart of a method for tracking an object in a sequence of video frames according to embodiments.
Fig. 5 illustrates first and second motion estimates of a tracked object in a current image frame according to embodiments.
Fig. 6 illustrates motion vectors of a current video frame determined by a video encoder.
Fig. 7 illustrates the calculation of a first cost for associating object detections to a tracked object according to a first group of embodiments.
Fig. 8 illustrates the calculation of a second cost for associating object detections to a tracked object according to a first group of embodiments.
Fig. 9 illustrates an alternative calculation of a second cost for associating object detections to a tracked object according to a first group of embodiments.
Figs 10a and 10b illustrates the calculation of a cost for associating object detections to a tracked object according to a second group of embodiments.
Fig. 11 schematically illustrates a device for tracking an object in a sequence of video frames according to embodiments.

### Detailed description of embodiments

The present invention will now be described more fully hereinafter with reference to the accompanying drawings, in which example embodiments are shown.

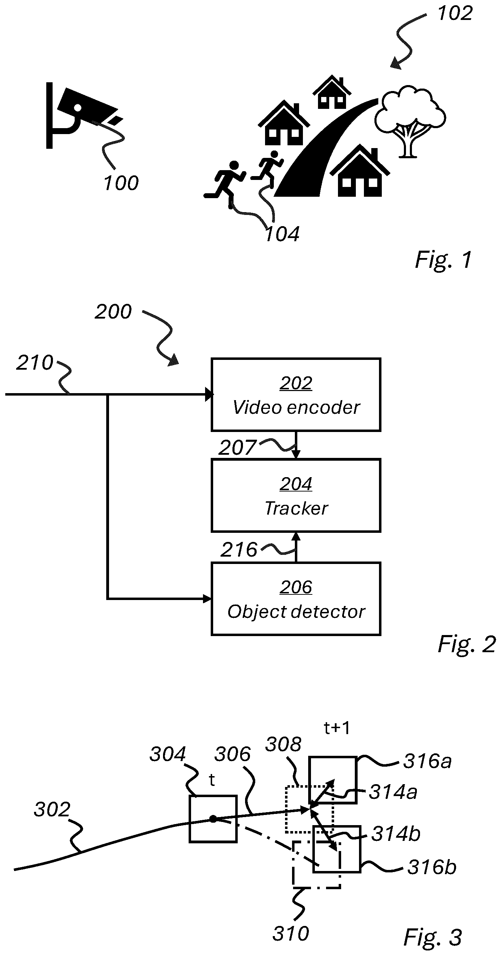

Fig. 1 illustrates a camera 100 monitoring an exemplary scene 102 in which there are moving objects 104 that should be tracked over time. The objects 104 may for instance include persons and/or vehicles. The camera 100 is a video camera which captures a sequence of video frames depicting the scene 102.

The sequence of video frames captured by the camera 100 may be processed by the system 200 shown in Fig. 2 to track the objects 104. The system 200 may be fully implemented in the camera 100, partially implemented in the camera 100, or may be provided separately from the camera 100. The system 200 comprises a video encoder 202, a device 204 for tracking an object in a sequence of video frames, and an object detector 206. The device 204 will be referred to as tracker 204 in the following.

The system 200 generally operates according to a tracking-by-detection principle where the tracker 204 receives object detections 216 from the object detector 206 and uses the object detections 216 to track one or more objects over time in the sequence video frames 210. For this purpose, the tracker 204 uses a tracking filter, also known as a statistical motion filter. By way of example, it may use a Kalman filter, and extended Kalman filter, or a statistical particle filter. A tracking filter is an algorithm that uses a series of noisy measurements observed over time, in this case the object detections 216 provided by the object detector 206, to produce and output estimates of unknown variables. The unknown variables may include position and motion variables, such as velocity, of the tracked objects. These unknown variables are also referred to as states and may be arranged in a state vector. The motion of an object estimated by the tracking filter is referred to herein as a first motion of the object.

The tracking filter estimates the states of the tracked objects, i.e., the position and first motion of the objects, in subsequent video frames of the video sequence 210. In order to do so it operates in a recursive or iterative manner in which it uses the estimate of the states of an object in a current video frame and, if available, a detection of the object in a subsequent video frame to estimate the states of the object in the subsequent video frame. Each iteration of the tracking filter may be divided into three sub-steps: a prediction step, an association step, and an update step.

In the prediction step, the tracking filter estimates the position and the first motion of an object in the subsequent video frame by predicting a position and a first motion of the object in the subsequent video frame from the position and the first motion of the object in the current video frame. In order to carry out the prediction, the tracking filter typically uses a motion model which describes how the state vector evolves from a current time point *t* to a subsequent time point *t +* 1, i.e., it models the dynamics of the object. Here the current time point t corresponds to the current video frame, and the subsequent time point t + 1 corresponds to a subsequent video frame. A common choice of motion model is a constant velocity model in which it is assumed that the object moves at constant velocity between the current and the subsequent time point. Another possible choice of motion model is a constant acceleration model where it is assumed that the acceleration remains constant. The motion model may in a per se known manner be described by a state transition matrix which when applied to the state vector at the current time point t provides a prediction of the state vector at the subsequent time point t + 1 according to: ${\hat{x}}^{t + 1} = {F}^{t + 1} {x}^{t} ,$ where *x̂*^{*t*+1} is the predicted state vector at time *t +* 1 and *F*^{*t*+1} is the state transition matrix which is applied to the state vector *x^{t}* at time *t.*

In the association step, object detections 216 in the subsequent video frame are matched to any tracked object to find out which object detection should be associated with which track and used to update the state vector of that track. Notably, the object detector 206 may have detected a plurality of objects in the subsequent image frame and a plurality of objects may be tracked by the tracker 204. In order to carry out the matching, the tracker 204 calculates a cost for associating each object detection with each tracked object. A higher cost indicates a worse match than a lower cost. How the tracker 204 performs the cost calculation will be explained in much more detail further below. Once the costs have been calculated, the tracker 204 associates object detections to the tracked objects depending on the costs. In particular, it may perform the associations so as to minimize a total cost of the object detections that are associated with the tracked plurality of objects. This is a combinatorial optimization problem which for example may be solved by using the Hungarian algorithm or another similar algorithm. When performing the associations, a maximum cost threshold may be applied to the costs, such that an association between an object detection and a tracked object is never carried out if the cost exceeds the maximum cost threshold. It can happen that the cost for associating an object detection with each of the object tracks exceeds the maximum cost threshold. In that case, the object detection may instead become a candidate for a new object to be tracked. In one example, a greedy approach is used to solve the optimization problem. The greedy approach is computationally efficient, but at the expense of sometimes resulting in a suboptimal solution. In more detail, according to the greedy approach the object detection and tracked object being assigned the lowest cost among all possible combinations of object detections and tracked objects are first associated with each other. This procedure is then repeated for any remaining, not yet associated, object detections and tracked objects until no object detections or object tracks remain to be associated or the costs for associating the remaining object detections with the remaining object tracks exceed the maximum cost threshold. As a result of the association performed by the tracker 204, some tracked objects may be associated with an object detection in the subsequent image frame, whereas other tracked objects may not.

Next, all tracked objects that were associated with an object detection in the subsequent image frame are subject to an updating step. In the updating step, the tracking filter 204 updates the predicted position and first motion of the object in view of the associated object detection. The updated position and first motion of the object becomes the estimated position and first motion of the object in the subsequent video frame. For a tracked object that was not associated with an object detection in the subsequent frame, the predicted position and first motion instead becomes the estimated position and first motion of the object in the subsequent video frame. The updating may be performed in a per se known manner, by combining or weighting together the predicted and detected states. For example, when a Kalman tracker is used, the tracking filter updates the state vector according to: ${x}^{t + 1} = {\hat{x}}^{t + 1} + {K}^{t + 1} \left({z}^{t + 1}-{H}^{t + 1}{\hat{x}}^{t + 1}\right) ,$ where *K*^{*t*+1} is a gain of the Kalman filter, *z*^{*t*+1} is a vector with the detected states, and *H^{tⁱ}* is an observation matrix describing how the detected states are related to the states in the state vector that the tracking filter estimates. Typically, one is only able to partially detect the states in the state vector. In this case, the object detector 206 detects position, but not motion of the object.

The association step poses a challenge in scenes in which there are multiple objects, such as in scene 100 where multiple objects 104 are present. If the object detections are not associated with the correct tracks the tracking will fail. Fig. 3 illustrates a situation in which the association easily may fail. It shows an object track 302, an estimated position 304 in the form of a bounding box and first motion 306 of a tracked object at a current time point t, corresponding to a current video frame. It further shows two object detections 316a and 316b, again shown as bounding boxes, detected at a subsequent time point t + 1 in a subsequent video frame. Without further input, costs for associating the object detections 316a and 316b to the object track 302 may be calculated based on how well the object detections 316a and 316b agrees with the first motion 306 estimated by the tracking filter. The higher the agreement, the lower the cost. In order to measure the agreement, the tracking filter may use the estimated position 302 and first motion 306 of the object in the current video frame to predict a position 308 of the object in the subsequent video frame by using a motion model as explained above. The association cost may then be calculated as a positional deviation 314a, 314b, between the position of the detected object 316a, 316b, in the subsequent frame and the predicted first position 308 of the object in the subsequent video frame. As a result, in the example of Fig. 3 object detection 316a would be assigned a lower association cost than object detection 316b. A problem with this approach is that it relies on that the motion model of the tracking filter accurately predicts the true motion of the object. For a constant velocity motion model, the motion model makes reliable predictions as long as the object approximately moves at a constant velocity. However, this will not be the case when the object makes sudden velocity changes, for example when it suddenly changes its motion direction. Thus, in the scenario that the object makes a sudden change in motion close to time t such that it at time *t* + 1 instead is located at position 310, the described approach will fail. In that scenario, the object detection 316b should be assigned a lower association cost than object detection 316a.

In order to improve the association between object detections and object tracks, the tracker 204 further uses second motion information regarding the tracked objects in the form of motion vectors 207 from the video encoder 202. The motion vectors have been found to be more responsive to sudden motion changes than the tracking filter, and therefore they can help improving the object detection association to avoid the situation described in Fig. 3. In more detail, the video encoder 202 encodes the sequence of video frames 210 by using motion compensation. As known in the art, motion compensation is a technique used to predict a video frame in a video sequence in relation to a reference video frame, which typically corresponds to another video frame in the sequence such as a previous video frame, a later video frame, or both a previous and later video frame in the sequence. When the reference frame is a previous video frame in the video sequence, the encoded video frame is referred to as a P-frame, and when the reference frame includes a later video frame the encoded video frame is referred to as a B-frame. For example, when a video frame captured at time t is encoded as a P-frame, the reference frame may correspond to the directly preceding video frame captured at time t - 1 in the video sequence. Motion compensation is implemented by most video coding standards, such as the H.26x, AV1, and VP9 standards. To implement the motion compensation for a video frame to be encoded, the video encoder 202 determines motion vectors for pixel blocks in the video frame by performing a motion vector search in the reference video frame. In more detail, for a pixel block to be encoded, the video encoder 202 searches within a search window in the reference video frame for a pixel block that gives a best match according to some criteria. For instance, the best matching pixel block may minimize a sum of absolute differences relative to the block to be encoded. The motion vector of a pixel block is then the vector that points from the pixel block in the video frame to be encoded to the best matching block in the reference frame found during the motion vector search. The motion vector of a pixel block may hence be seen as a displacement of the image contents in a pixel block in the video frame to be encoded in relation to the reference frame. In other words, the motion vector is indicative of a velocity in a pixel block of a video frame, i.e., it provides a measure of how much and in which direction the image content in the pixel block has moved during the time period between the video frame and the reference frame.

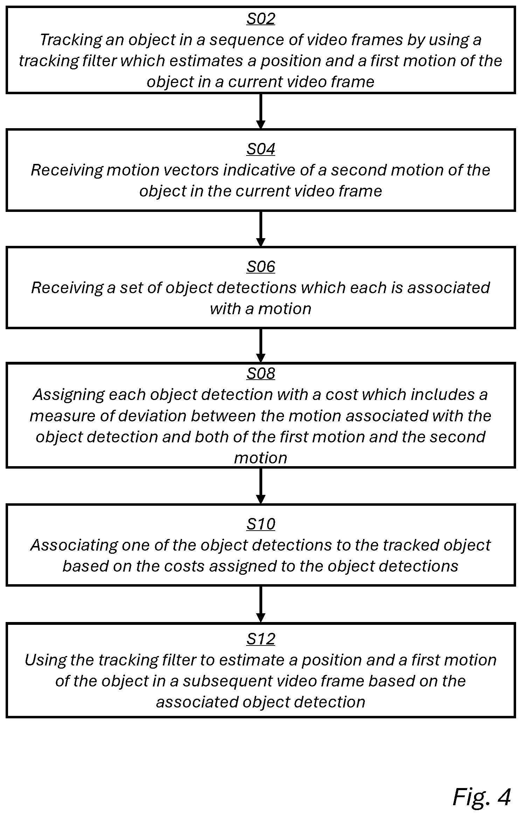

The operation of the tracker 204 when performing a method for tracking an object in a sequence of video frames by using motion vectors from the video encoder 202 and object detections 216 from the object detector 206 will now be described with reference to the flow chart of Fig. 4 and with further reference to Fig. 2. The method is an iterative method and one iteration of the method will be described in which the object states are evolved from a current time point *t* to a subsequent time point *t +* 1, corresponding to a current and a subsequent video frame, respectively. Moreover, the method is described in connection to the tracking of one object, but it is understood that when several objects are tracked in the sequence of video frames the described method can be applied to each tracked object.

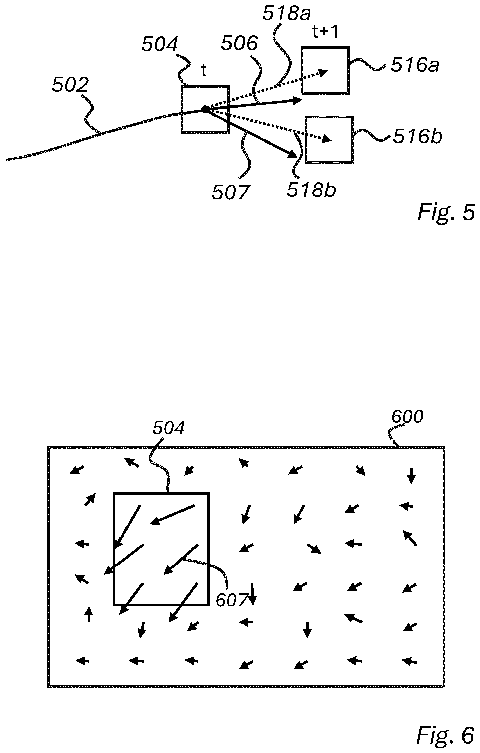

In step S02, the tracker 204 tracks an object in the sequence of video frames 210 by using a tracking filter. As explained above, the tracking filter operates in an iterative fashion to successively estimate a position and a first motion of the object in subsequent video frames. When the described iteration of the method starts in step S02, the tracking filter has just, as a result of the previous iteration, estimated a position and a first motion of the object in the current video frame. The estimated position and first motion of the object in the current video serve as start values for the described iteration. Fig. 5 shows a track 502 of an object and the position 504 and the first motion 506 of the object estimated by the tracking filter in the current video frame corresponding to a time point t. As shown, the position may define the position of a bounding box of the object. The first motion may describe a velocity, i.e., motion speed and direction, of the object.

In step S04, the tracker 204 receives motion vectors from the video encoder 202 which encodes the sequence of video frames 210. The motion vectors are indicative of a second motion 507 of the object in the current video frame as illustrated in Fig. 5. Notably, the second motion 507 indicated by the motion vectors typically differs from the first motion 506 estimated by the tracking filter. The second motion 507 of the object may be calculated from motion vectors provided by the video encoder 202.

Fig. 6 schematically illustrates motion vectors 607 for a current video frame 600. There is one motion vector 607 for each pixel block used when encoding the current video frame 600. It further shows the estimated object position 504, here in the form of a bounding box, where the tracking filter estimates that the object is located in the current video frame 600. As can be seen, the object position 504 covers an area in the video frame 600, referred to herein as an object area, which in this case includes more than one pixel block and hence corresponds to more than one motion vector. It is understood that in other cases there may only be one motion vector in the object area. As previously explained, each motion vector is indicative of a velocity in the pixel block. Thus, the one or more motion vectors 607 in the object area are indicative of a velocity of the object in the current video frame 600. When there are more than one motion vector in the object area, a representative motion vector can be formed from the motion vectors in the object area, e.g., by calculating an average of the plurality of motion vectors. The velocity indicated by the representative motion vector can then be used as a measure of the second motion 507 of the object in the video frame 600.

The velocity indicated by the one or more motion vectors 607 may be calculated by a rescaling operation, and sometimes also a redirection operation. In more detail, the one or more motion vectors 607 each correspond to a displacement between the current video frame and a reference frame used by the video encoder 202 in the encoding. Therefore, calculating the velocity indicated by the or more motion vectors 607 may include dividing the displacement by the temporal distance between the current video frame and the reference frame. For example, if the reference frame is the directly preceding video frame in the sequence of video frames and the frame rate is 30 frames per second, the temporal distance is 1/30 seconds. When the object position 504 covers several motion vectors, the displacement of the representative motion vector may be used in the calculations. Moreover, it is noted that the motion vectors points from blocks in the current video frame to blocks in the reference frame. Thus, in cases where the reference frame is a previous video frame in the video sequence, the motion vectors point back to blocks in a previous frame. When the reference frame is a previous video frame in the video sequence, calculating the velocity indicated by the or more motion vectors 607 may therefore further include reversing the direction of the motion vectors 607. Reversing the direction of the motion vectors is however not needed when the reference frame is a later video frame in the sequence.

In step S06, the tracker 204 receives a set of object detections in the subsequent video frame of the video sequence from the object detector 202. Fig. 5 shows a set of object detections 516a and 516b made in the subsequent video frame at time t + 1. In this example two object detections are shown. Each object detection 516a, 516b is associated with a motion 518a, 518b. The motion of an object detection 516a, 516b corresponds to a displacement between the estimated position 504 of the object in the current video frame and a position of the object detection 516a, 516b in the subsequent video frame. For example, the motion of an object detection 516a, 516b may correspond to a vector between the center points or other corresponding points of the estimated object position 504 in the current video frame and the object detection 516a, 516b in the subsequent video frame.

The object detector 206 provides object detections which are indicative of the positions and preferably also class labels of the objects detected in the video frames. For example, the object detections may correspond to a set of object detection areas, for example in the form of bounding boxes around the detected objects. The object detection areas may also be associated with class labels and confidence scores reflecting the certainty of the class label. In order to detect objects in the video frames, the object detector 206 may implement an existing object detection algorithm. One approach to object detection involves convolutional neural networks (CNNs) that analyze spatial features across an image to identify patterns associated with different object classes. Object detection models are generally divided into two categories: single-stage and two-stage detectors. Single-stage detectors, like YOLO (You Only Look Once) and SSD (Single Shot MultiBox Detector), predict bounding boxes and class labels directly in a single pass through the network, making them efficient for real-time applications. Two-stage detectors, such as Faster R-CNN (Region-based Convolutional Neural Network), separate the detection process into two steps: generating region proposals and then classifying these proposals, which often results in higher accuracy but slower processing speeds. To implement object detection in practice, an image is first passed through a CNN that generates feature maps. For single-stage models like YOLO, the network directly outputs bounding box coordinates, class labels, and confidence scores for each detected object. For two-stage models like Faster R-CNN, the region proposal network generates initial bounding boxes, which are further processed by a classification network to refine the predictions. Training an object detection model requires a large dataset where each object is annotated with bounding boxes and class labels. The model learns to minimize a multi-part loss function that combines classification loss (for correct labelling) and localization loss (for accurate bounding box prediction). Data augmentation techniques, such as scaling, cropping, and flipping, are commonly used during training to improve the model's robustness and generalization.

In step S08, the tracker 204 assigns to each object detection 516a, 516b a cost for associating the object detection 516a, 516b to the object track 502. Several embodiments for how to calculate the cost will be described in the following. However, common to all embodiments is that the cost includes a measure of deviation between the motion 518a, 518b associated with the object detection 516a, 516b and both of the first motion 506 in the current video frame estimated by the tracking filter and the second motion 507 in the current video frame indicated by the motion vectors. Thus, when calculating the cost for an object detection the second motion 507 indicated by the motion vectors is used as a complement to the first motion 506 estimated by the tracking filter. The level of impact or influence the second motion has on the cost may be set depending on a reliability level of the received motion vectors such that the impact or influence increases with increasing reliability level. Examples of how the reliability level of the motion vectors can be determined will be described further below.

In a first group of embodiments, the cost includes a combination of a first cost and a second cost. The combination of the first and the second cost is made such that for a fixed first cost the combined cost increases with an increasing value of the second cost. The first cost is a measure of deviation between the motion 518a, 518b associated with the object detection 516a, 516b and the first motion 506 in the current video frame estimated by the tracking filter. The second cost is instead a measure of deviation between the motion 518a, 518b associated with the object detection 516a, 516b and the second motion 507 in the current video frame indicated by the motion vectors.

The combination may be a multiplicative combination. For example, the cost may be calculated as C *= C*1 · *C2,* where C1 and C2 are the first and the second costs, respectively. Possibly, the second cost C2 may include (be a function of) a weight factor w reflecting a reliability level of the motion vectors. The higher the weight factor, the higher the impact of the second cost C2 on the combined cost. In another example, the combination is instead an additive combination. In particular, the cost may be calculated as a weighted sum C = *w1C1 + w2C2,* where the weights are greater than zero. In one example, *w*1 is set to one such that the second cost adds an additional cost to the first cost. In another example, w1 = (1 - w) and w2 = w, where 0 < w < 1 reflects a reliability of the motion vectors. In the latter example, the total cost can be written as *C = C1 + w*(*C2 - C*1)*,* such that if the second cost is larger than the first, it will add a weighted amount of this difference, otherwise it will subtract. In the case of an additive combination, the ratio of the weights *w2*/*wl* may be set to reflect a reliability level of the motion vectors.

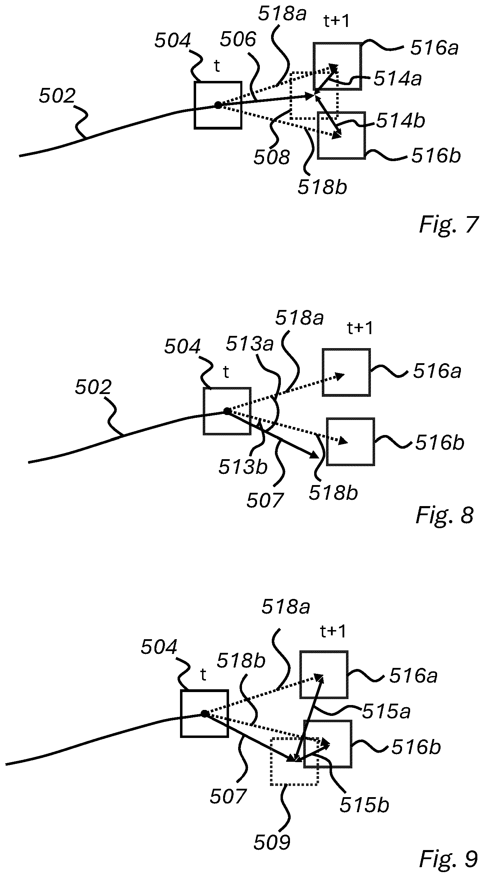

The first cost may be calculated according to the methodology explained in connection with Fig. 3 and as further illustrated in Fig. 7. That is, the tracking filter may use the estimated position 504 and first motion 506 of the object in the current video frame to predict a first position 508 of the object in the subsequent video frame. It may then calculate the first cost as a positional deviation 514a, 514b between the position of the detected object 516a, 516b in the subsequent frame and the predicted first position 508 of the object in the subsequent video frame. The positional deviation may for instance be calculated as the inverse of the intersection over union (IoU) between the positions of the detected objects 516a, 516b and the predicted first position 508. Another option is to calculate the distance between the center positions or other corresponding points of the predicted first position 508 of the object and the object detection 516a, 516b. Notably, a first cost calculated in this manner provides a measure of the deviation between the first motion 506 and the motion 518a, 518b associated with the object detection 516a, 516b. The first cost increases with increasing deviation between the motion 518a, 518b associated with the object detection 516a, 516b and the first motion 506 in the current video frame estimated by the tracking filter.

The second cost may be calculated as a function of an angular deviation between a direction of the motion associated with the object detection and a direction of the second motion in the current video frame indicated by the motion vectors. This approach is further illustrated in Fig. 8 which shows the angular deviations 513a, 513b between the second motion 507 indicated by the motion vectors and the motions 518a 518b associated with the object detections 516a, 516b. For example, in case an multiplicative combination of the first and second costs are used, the second cost may be determined as C2 *=* (1 *- w · cosθ*), where *θ* is the angular deviation and 0 < w ≤ 1 is an optional weight factor which increases with increasing reliability of the motion vectors.

As an alternative, the second cost may be calculated in terms of a positional deviation. In this alternative, and as shown in Fig. 9, the tracker 204 predicts a second position 509 of the object in the subsequent video frame from the estimated position 504 of the object in the current video frame and the second motion 507 in the current video frame indicated by the motion vectors. The prediction may be carried out by spatially shifting the estimated position 504 in a direction and by an amount that corresponds to the second motion 507. The tracker 204 may then calculate the second cost as a positional deviation 515a, 515b between the position of the detected object 516a, 516b and the predicted second position 509 of the object. For instance, the positional deviation may be calculated as an inverse of the IoU between the predicted second position 509 of the object and the object detection 516a, 516b. Another option is to calculate the distance between the center positions or other corresponding points of the predicted second position 509 of the object and the object detection 516a, 516b. Notably, a second cost calculated in this manner provides a measure of the deviation between the second motion 507 and the motion 518a, 518b associated with the object detection 516a, 516b. The second cost increases with increasing deviation between the motion 518a, 518b associated with the object detection 516a, 516b and the second motion 507 in the current video frame indicated by the motion vectors. The second cost may then be combined with the first cost described above, for example by way of an additive combination as explained above.

In the first group of embodiments, the tracker 204 thus adjusts a first cost which is calculated by using the motion estimate from the tracking filter by using a second cost which is calculated from the motion estimate from the motion vectors. In a second group of embodiments, the tracker 204 takes a somewhat different approach in calculating the cost. More specifically, the tracker 204 adjusts a predicted first object position, which is predicted by the tracking filter, by using a predicted second object position, which is predicted by using the motion vectors. The adjusted prediction is then used for calculating the cost.

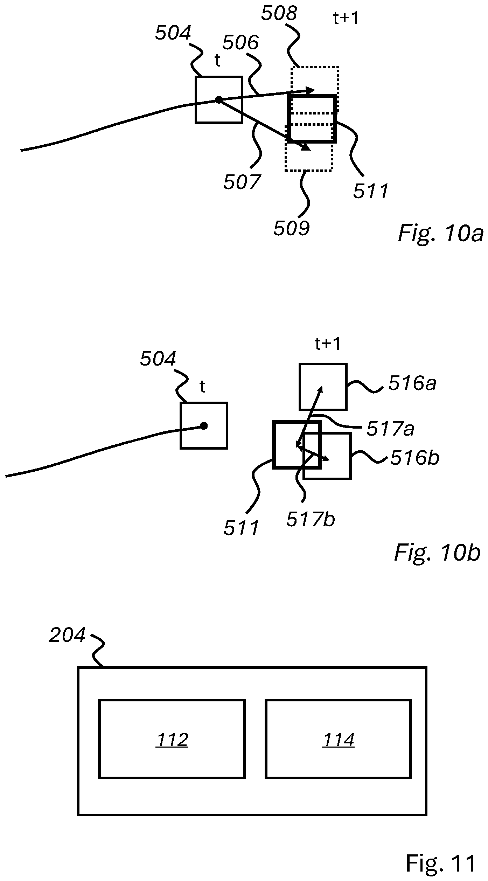

This approach is shown in more detail in Figs 10a and 10b. Fig. 10a which shows the estimated position 504 and first motion 506 of the object in the current image frame, and the second motion 507 indicated by the motion vectors. The tracking filter uses the estimated position 504 and first motion 506 of the object to predict a first position 508 of the object in the subsequent video frame. The first prediction may be obtained as explained above in connection to Fig. 3. The tracker 204 further predicts a second position 509 of the object in the subsequent video frame from the estimated position 504 of the object in the current video frame and the second motion 507 in the current video frame indicated by the motion vectors. The second prediction may be obtained as explained above in connection to Fig. 9. The tracker 204 then combines the predicted first position 508 and the predicted second position 509 to get a combined predicted position 511 which is located between the two predictions 508 and 509. Then, as shown in Fig. 10b, the tracker 204 determines the cost as a positional deviation 517a, 517b between the position of the detected object 516a, 516b in the subsequent video frame and the combined predicted position 511.

The combination may be calculated as a weighted average of the predicted first position 508 and the predicted second position 509. In the weighted average, the weight applied to the predicted second position 509 may be set to reflect a reliability level of the received motion vectors. The more reliable, the higher the weight. In this way, the influence of the second motion indicated by the motion vectors increases with increasing reliability level.

There are different factors that have an impact on the reliability of the motion vectors. One such factor is the signal to noise ratio (SNR) in the video frames. In images with lower SNR the motion vectors generally have a lower reliability level than in images with a high SNR. Therefore, the reliability level of the received motion vectors may be determined from the SNR in the current video frame. For instance, a predetermined table which associates SNR with reliability levels may be used for this purpose.

Another way to determine the reliability level of the received motion vectors is to look at their coherency, i.e., how consistent their size and directions are. Again referring to Fig. 6, the estimated position 504 of the object in the current video frame corresponds to an object area in the current video frame. The reliability level of the received motion vectors may be determined from a level of coherency of the motion vectors 607 in the motion area 504. The level of coherency may in turn be determined from a statistical dispersion measure of the motion vectors. A higher dispersion, i.e., a higher variability, is associated with a lower level of coherency and hence a lower reliability level than a lower dispersion.

Once a cost has been assigned to each object detection, the method proceeds to step S12 in which the tracker 204 associates one of the object detections to the tracked object based on the costs assigned to the object detections. The association may be carried out in a per se known manner as explained above. In a simple example where only one object is tracked, the object detection which is assigned the lowest cost is associated with the tracked object. However, in examples where a plurality of objects are tracked in the sequence of video frames that simple approach does not work. In such scenarios, all possible combinations between object detections and tracked objects may be considered, and the combination that minimizes the total cost may be selected. For example, the optimal combination may be found by using the Hungarian or other similar algorithm.

The tracker 204 then uses the tracking filter to estimate a position and first motion of the object in the subsequent video frame based on the associated object detection. As explained in more detail above, this may be carried out by first predicting a position and a first motion of the object in the subsequent video frame, and then updating the predicted position and first motion of the object in the subsequent video frame in view of the associated object detection.

In the system shown in Fig. 2, the video encoder 202, the tracker 204 (i.e., the device for tracking an object in a sequence of video frames), and the object detector 206 may comprise circuitry configured to implement their respective functionalities.

Fig. 11 shows the device 204 in more detail. It comprises, circuitry 112, such as a processing circuitry. It may further comprise a memory 114.

The circuitry may be in the form of a processor, such as a microprocessor or central processing unit, which in association with computer code instructions stored on a (non-transitory) computer-readable medium, such as the memory 114, causes the device 204 to carry out any method disclosed herein. The memory 114 may be non-volatile memory. Examples of non-volatile memory include read-only memory, flash memory, ferroelectric RAM, magnetic computer storage devices, optical discs, and the like.

In another implementation, the circuitry is dedicated and specifically designed to carry out any method herein. The circuitry may be in the form of one or more integrated circuits, such as one or more application specific integrated circuits or one or more field-programmable gate arrays.

It will be appreciated that a person skilled in the art can modify the above-described embodiments in many ways and still use the advantages of the invention as shown in the embodiments above. For example, the cost for associating an object detection to a tracked object may be a combination of cost measures described above and additional cost measures. The various cost measures may be combined in the form of a weighted sum. An example of an additional cost measure that may be included is a cost measure which measure the similarity in appearance between the object detection and the tracked object. The similarity in appearance may be calculated by using re-identification techniques. Thus, the invention should not be limited to the shown embodiments but should only be defined by the appended claims. Additionally, as the skilled person understands, the shown embodiments may be combined.

## Claims

1. A method for tracking an object in a sequence of video frames, comprising:
tracking (S02) an object (104) in a sequence of video frames (210) by using a tracking filter, wherein the tracking filter estimates a position (504) and a first motion (506) of the object in a current video frame,
receiving (S04) motion vectors (607) from a video encoder (202) which encodes the sequence of video frames, wherein the motion vectors are indicative of a second motion (507) of the object in the current video frame,
receiving (S06) a set of object detections (516a, 516b) in a subsequent video frame in the sequence, wherein each object detection is associated with a motion (518a, 518b) that corresponds to a displacement between the estimated position of the object in the current video frame and a position of the object detection in the subsequent video frame,
assigning (S08), for each object detection, a cost for associating the object detection to the tracked object, wherein the cost includes a measure of deviation between the motion (518, 518b) associated with the object detection and both of the first motion (506) in the current video frame estimated by the tracking filter and the second motion (507) in the current video frame indicated by the motion vectors,
associating (S10) one of the object detections to the tracked object based on the costs assigned to the object detections, and
using (S12) the tracking filter to estimate a position and a first motion of the object in the subsequent video frame based on the associated object detection.

2. The method of claim 1, wherein an impact of the second motion (507) on the cost depends on a reliability level of the received motion vectors (607) such that the impact increases with increasing reliability level.

3. The method of claim 2, wherein the reliability level of the received motion vectors (607) is determined from a signal to noise ratio in the current video frame, or
wherein the estimated position (504) of the object in the current video frame corresponds to an object area in the current video frame, and the reliability level of the received motion vectors is determined from a level of coherency of the motion vectors in the object area.

4. The method of any one of the preceding claims, wherein the cost includes a combination of a first cost and a second cost, wherein the first cost is a measure of deviation between the motion (518a, 518b) associated with the object detection and the first motion (506) in the current video frame estimated by the tracking filter, and the second cost is a measure of deviation between the motion (518a, 518b) associated with the object detection and the second motion (507) in the current video frame indicated by the motion vectors.

5. The method of claim 4, wherein the combination is a multiplicative combination or an additive combination of the first cost and the second cost.

6. The method of claim 4 or 5,
wherein the tracking filter uses the estimated position (504) and first motion (506) of the object in the current video frame to predict a first position (508) of the object in the subsequent video frame,
wherein the first cost is calculated as a positional deviation (514a, 514b) between the position of the detected object (516a, 516b) in the subsequent frame and the predicted first position (508) of the object in the subsequent video frame.

7. The method of any one of claims 4-6, wherein the second cost depends on an angular deviation (513a, 513b) between a direction of the motion (518a, 518b) associated with the object detection (516a, 516b) and a direction of the second motion (507) in the current video frame indicated by the motion vectors.

8. The method of any one of claims 4-6, further comprising:
predicting a second position (509) of the object in the subsequent frame from the estimated position (504) of the object in the current video frame and the second motion (507) in the current video frame indicated by the motion vectors,
wherein the second cost is calculated as a positional deviation (515a, 515b) between the position of the detected object (516a, 516b) in the subsequent video frame and the predicted second position (509) of the object in the subsequent video frame.

9. The method of any one of claims 1-3,
wherein the tracking filter uses the estimated position (504) and first motion (506) of the object in the current video frame to predict a first position (508) of the object in the subsequent video frame,
wherein the method further comprises predicting a second position (509) of the object in the subsequent video frame from the estimated position (504) of the object in the current video frame and the second motion (507) in the current video frame indicated by the motion vectors, and
wherein the cost is a positional deviation (517a, 517b) between the position of the detected object in the subsequent video frame and a combination (511) of the predicted first (508) and second (509) positions in the subsequent video frame.

10. The method of claim 9, wherein the combination (511) of the predicted first (508) and second positions (509) in the subsequent video frame is a weighted average of the predicted first and second positions.

11. The method of any one of the preceding claims, wherein the method is applied to track a plurality of objects in the sequence of video frames,
wherein, in the step of associating (S10), object detections (516a, 516b) are associated to the tracked plurality of objects so as to minimize a total cost of the object detections that are associated with the tracked plurality of objects.

12. The method of any one of the preceding claims, wherein the tracking filter estimates the position (504) and the first motion (506) of the object in the subsequent video frame by:
predicting a position and a first motion of the object in the subsequent video frame from the position and the first motion of the object in the current video frame, and
updating the predicted position and first motion of the object in the subsequent video frame in view of the associated object detection.

13. A device (204) for tracking an object in a sequence of video frames, comprising circuitry (112) configured to:
track an object (104) in a sequence of video frames (210) by using a tracking filter, wherein the tracking filter estimates a position (504) and a first motion (506) of the object in a current video frame,
receive motion vectors (607) from a video encoder (202) which encodes the sequence of video frames, wherein the motion vectors are indicative of a second motion (507) of the object in the current video frame,
receive a set of object detections (516a, 516b) in a subsequent video frame in the sequence, wherein each object detection is associated with a motion (518a, 518b) that corresponds to a displacement between the estimated position of the object in the current video frame and a position of the object detection in the subsequent video frame,
assign, for each object detection, a cost for associating the object detection to the tracked object, wherein the cost includes a measure of deviation between the motion (518, 518b) associated with the object detection and both of the first motion (506) in the current video frame estimated by the tracking filter and the second motion (507) in the current video frame indicated by the motion vectors,
associate one of the object detections to the object track based on the costs assigned to the object detections, and
use the tracking filter to estimate a position and a first motion of the object in the subsequent video frame based on the associated object detection.

14. A system (200) for tracking an object in a sequence of video frames, comprising:
a video encoder (202) configured to encode the sequence of video frames and produce motion vectors indicative of a motion of the object in the video frames
an object detector (206) configured to detect objects in the video frames of the sequence of video frames, and
a device (202) for tracking an object in the sequence of video frames according to claim 13, wherein the device receives motion vectors from the video encoder and object detections from the object detector.

15. A non-transitory computer-readable medium comprising computer program code which, when executed by a device with processing capability, causes the device to carry out the method of any one of claims 1-12.
